# EUROPÄISCHE PATENTSCHRIFT

(11) **EP 1 602 530 B1**
(45) Veröffentlichungstag und Bekanntmachung des Hinweises auf die Patenterteilung: **20.02.2008**
(21) Anmeldenummer: 05104055.8
(22) Anmeldetag: 13.05.2005
(51) Int. Cl.: B60Q 1/48

(54) **Verfahren zur Unterstützung eines Einparkvorgangs eines Fahrzeugs**
Method for assisting a parking procedure of a vehicle
Méthode pour assister le stationnement d'un véhicule

(30) Priorität: 02.06.2004 DE 102004026848
(43) Veröffentlichungstag der Anmeldung: 07.12.2005
(73) Patentinhaber: ROBERT BOSCH GMBH, 70442 Stuttgart (DE)
(72) Erfinder: Danz, Christian, 70469 Stuttgart (DE); Schmid, Dirk, 75397 Simmozheim (DE); Lee, Wei-Cha, 71229 Leonberg (DE); Lehner, Philipp, 75417 Muehlacker (DE); Bollengier, Cyrille, 70469 Stuttgart (DE); Faber, Petko, 71229 Leonberg (DE); Schaaf, Gunther, 70806 Kornwestheim (DE)

(56) Entgegenhaltungen:
- EP-A- 0 735 383
- WO-A-03/070517
- DE-A1- 10 252 426
- US-A- 4 931 930

## Beschreibung

### Stand der Technik

Die Erfindung betrifft ein Verfahren zur Unterstützung eines Einparkvorgangs eines Fahrzeugs in eine seitlich zum zu parkenden Fahrzeug angeordnete Parklücke, wobei mittels einer Sensoranordnung des Fahrzeugs die Parklücke während eines Vorbeifahrens des Fahrzeugs an der Parklücke erfasst wird.

Ein derartiges Verfahren ist als Funktion einer Parklückenvermessung, die den Fahrer eines Fahrzeugs bei der Suche nach einer ausreichend großen Parklücke für sein Fahrzeug unterstützt, bekannt. Die Parklückenvermessung kann mit einem System zum semiautonomen Einparken zusammenarbeiten, bei dem der Fahrer Fahr- und Bremspedal des Fahrzeugs bedienen muss, wohingegen das Lenken auch automatisch ausgeführt werden kann. Das System berechnet eine optimale Bahnkurve für das Einparken des Fahrzeugs und informiert den Fahrer, zum Beispiel mit Hilfe von akustischen Signalen, über die Aktionen, die er auszuführen hat, um das Fahrzeug bestmöglich in der Parklücke abzustellen. Ein Grundsatz dabei ist, dass das Fahrzeug eine seitliche Parklückenbegrenzung, beispielsweise einen Bordstein oder eine Hauswand, nicht touchieren oder gar überfahren darf. Ein sicheres und zielgerichtetes Erfassen dieser Parklückenbegrenzung zum Beispiel mittels Ultraschallsensoren ist jedoch nicht immer möglich, wodurch die Wirksamkeit des Einparksystems fallweise nicht unerheblich gemindert werden kann.

Darüber hinaus ist aus DE 298 04 296 U1 eine elektronische Pkw-Einparkhilfe, die ein Einparken neben einem Bordstein erleichtern und vor einer Berührung des Bordsteins warnen soll, bekannt. Die Einparkhilfe weist Ultraschallsensoren und ein Steuerungssystem auf, das von den Ultraschallsensoren erfasste Abstände zum Bordstein auswertet und nach dem Erreichen eines festgelegten Abstandes dem Fahrer des Pkw ein Signal gibt. Die bekannte Einparkhilfe betrifft ein seitliches Einparken neben einem Bordstein bei gleichzeitiger Erfassung des Bordsteins durch das Steuerungssystem.

Der Erfindung liegt die Aufgabe zugrunde, ein Verfahren zur Unterstützung eines Einparkvorgangs der eingangs beschriebenen Art anzugeben, das eine zuverlässige Referenz für die seitliche Parklückenbegrenzung liefert.

Diese Aufgabe wird erfindungsgemäß mit einem Verfahren der eingangs genannten Art dadurch gelöst, dass die Position der dem zu parkenden Fahrzeug abgewandten seitlichen Parklückenbegrenzung und/oder die Orientierung der seitlichen Parklückenbegrenzung bezüglich des zu parkenden Fahrzeugs aus vor dem Erreichen und/oder nach dem Passieren der Parklücke durch das Fahrzeug von der Sensoranordnung erfassten Daten berechnet wird.

Aus der US 4,931,930, der WO 03/070517 A1 und der DE 102 52 426 A1 sind Abstandsmessvorrichtung zur Parklückenvermessung bekannt. Während einer Vorbeifahrt eines Fahrzeugs an einer Parklücke wird der Abstand des Fahrzeugs zu einer seitlichen Begrenzung der Parklücke gemessen, um insbesondere festzustellen, ob die Parklücke breit genug für ein Einparken des Fahrzeugs ist.

### Vorteile der Erfindung

Nach dem erfindungsgemäßen Verfahren, das insbesondere ein Rückwärtseinparken betrifft, wird somit zunächst die Parklücke beim Vorbeifahren des einzuparkenden Fahrzeugs erfasst. Dabei wird das mögliche Vorhandensein einer Parklücke für das Fahrzeug erkannt.

Zur Erfassung und Vermessung sind in der Sensoranordnung bevorzugt seitlich bezüglich des Fahrzeugs ausgerichtete Sensoren vorgesehen. Zur Bestimmung der seitlichen Parklückenbegrenzung und/oder zur Bestätigung ihrer Anordnung wird erfindungsgemäß auf im Umfeld der Parklücke, das heißt vor ihrem Erreichen oder nach ihrem Passieren, von der Sensoranordnung erfasste Informationen zurückgegriffen. Auf diese Weise kann eine wirkungsvolle Einparkunterstützung auch dann erfolgen, wenn die Parklückenbegrenzung beispielsweise durch Verschmutzung nicht erkennbar ist oder wenn ihre Lage zweifelhaft ist, beispielsweise beim Vorliegen verschiedenartiger, sich scheinbar widersprechender von den Sensoren gelieferten Informationen; der letztgenannte Fall kann zum Beispiel eintreten, wenn eine aufgezeichnete Fahrbahnmarkierung und ein Bordstein nebeneinander auftreten und für die Sensoranordnung nicht ohne weiteres trennbar sind. Die Unterstützung des Einparkvorgangs wird mit der Erfindung vorteilhaft weniger anfällig gegenüber technischen Störungen und widrigen Umgebungsbedingungen. Außerdem ist mit dem erfindungsgemäßen Verfahren eine präzisere Bahnplanung eines Einparksystems ermöglicht, so dass eine exaktere Ausrichtung des zu parkenden Fahrzeugs in der Parklücke ohne Erhöhung der Anzahl der Einparkzüge erreicht werden kann. Position und/oder Orientierung der seitlichen Parklückenbegrenzung können beispielsweise mittels eines Steuergerätes oder eines Mikroprozessors berechnet werden.

Der Einparkvorgang wird weiter vereinfacht und der Fahrer zusätzlich unterstützt, wenn gemäß einer vorteilhaften Weiter-bildung der Erfindung die Länge der Parklücke während des Vorbeifahrens des zu parkenden Fahrzeugs erfasst wird. Die Vermessung der Parklückenlänge erfolgt beim längsseitigen Vorbeifahren, wobei von mindestens einem Abstandssensor der Sensoranordnung des vorbeifahrenden Fahrzeugs die seitliche Entfernung beispielsweise zu bereits parkenden Fahrzeugen zyklisch gemessen wird. Die einzelnen Messwerte werden zum Beispiel im Steuergerät gespeichert. Nach dem Vorbeifahren können die Abstandsmesswerte ausgewertet werden, indem sie mit der gefahrenen Wegstrecke, die beispielsweise von Radimpulszählern des zu parkenden Fahrzeugs erfasst wird, verknüpft werden. Als Ergebnis dieser Auswertung können die Eckpositionen der potentiellen Parklücke relativ zu der gefahrenen Bahn des zu parkenden Fahrzeugs bestimmt werden.

Besonders günstig ist es, wenn gemäß einer anderen vorteilhaften Weiterbildung der Erfindung die Tiefe der Parklücke während des Vorbeifahrens des zu parkenden Fahrzeugs erfasst wird. Ein Maß für die Tiefe kann beispielsweise anhand der Fahrzeugtiefe bereits parkender Fahrzeuge grob abgeschätzt werden. Damit kann bereits eine erste Information über die zu vermutende Lage der seitlichen Parklückenbegrenzung erlangt werden.

Grundsätzlich kann die Sensoranordnung nach verschiedensten physikalischen Prinzipien arbeiten, beispielsweise auf der Grundlage von Signalen optischer Sensoren. Ein sehr betriebssicheres und kostengünstiges Verfahren wird aber erreicht, wenn gemäß einer anderen vorteilhaften Weiterbildung der Erfindung die Daten mittels eines Puls-Echo-Verfahrens erfasst werden. Besonders dauerhaltbar und einfach einzusetzen sind für dieses Verfahren Ultraschallsensoren.

Insbesondere für Fälle, in denen im Bereich der Parklücke von der Sensoranordnung keinerlei mögliche seitliche Parklückenbegrenzung erkannt werden kann, ist es vorteilhaft, wenn gemäß einer Weiterbildung der Erfindung vor dem Erreichen der Parklücke eine eine potentielle seitliche Parklückenbegrenzung bildende Fahrbahnbegrenzung und/oder eine Reihe bereits parkender Fahrzeuge erfasst wird. Somit können zur Bestimmung der Orientierung der seitlichen Parklückenbegrenzung Messwerte der Sensoranordnung aus der Zeit vor dem Erreichen der Parklücke verwendet werden. Stehen am Ort der Parklücke dann keine Messwerte bezüglich der seitlichen Parklückenbegrenzung zur Verfügung, so kann deren Orientierung dennoch aus den Messwerten der Vergangenheit rekonstruiert werden. Bei Heranziehung der Ausrichtung (am Straßenrand) parkender Fahrzeuge als Referenz kann zusätzlich durch Mittelung der gemessenen Ausrichtung über mehrere Fahrzeuge ein möglicher Fehler durch einzelne schräg stehende Fahrzeuge minimiert werden.

Gemäß einer anderen vorteilhaften Weiterbildung der Erfindung wird sowohl ein die Parklücke an deren vorderen Ende begrenzendes erstes Fahrzeug als auch ein die Parklücke an deren hinteren Ende begrenzendes zweites Fahrzeug beim Vorbeifahren des zu parkenden Fahrzeugs an der Parklücke erfasst. Aus den Daten des ersten und des zweiten Fahrzeugs lässt sich in einfacher Weise eine wahrscheinliche Orientierung der seitlichen Parklückenbegrenzung (und damit auch die wahrscheinliche Orientierung der Parklücke an sich) ermitteln. Informationen über die Orientierung der Parklücke sind sehr hilfreich für eine effektive Bahnplanung zum Beispiel des Steuergerätes zur Unterstützung des Einparkvorgangs; denn andernfalls müsste die Orientierung des zu parkenden Fahrzeugs vor dem ersten Zurückstoßen in die Parklücke als Referenz herangezogen werden. Steht dieses Fahrzeug aber nicht parallel zur Parklücke, zum Beispiel weil nicht geradlinig an der Parklücke vorbeigefahren wurde, wird auch die Endposition des Fahrzeugs in der Parklücke unter einem Winkel zur seitlichen Parklückenbegrenzung ausgerichtet sein. Dieser Fehler lässt sich mit vorgenannter Weiterbildung vermeiden.

Eine mögliche einfache Bestimmung der Parklückenorientierung kann gemäß einer vorteilhaften Weiterbildung der Erfindung dadurch erfolgen, dass sowohl die Orientierung des ersten Fahrzeugs als auch die Orientierung des zweiten Fahrzeugs erfasst wird und dass der Mittelwert der beiden erfassten Orientierungen als die in der Parklücke zu erreichende Orientierung des zu parkenden Fahrzeugs festgelegt wird. Die in der Parklücke zu erreichende Orientierung des zu parkenden Fahrzeugs, also dessen Zielorientierung, entspricht der Orientierung der Parklücke selbst. Durch die Berechnung der Orientierung der Parklücke und damit der seitlichen Parklückenbegrenzung als Mittelwert aus den Orientierungen der beiden die Parklücke begrenzenden Fahrzeuge ergibt sich der Vorteil, dass auch bei unterschiedlichem Abstand der parkenden Fahrzeuge vom Fahrbahnrand, insbesondere Bordstein, die Orientierung zutreffend bestimmt wird. Außerdem erfolgt durch die Mittelung vorteilhaft ein Ausgleich des möglichen Fehlers bei gegensinnig schief stehenden Fahrzeugen.

Gemäß einer anderen vorteilhaften Weiterbildung der Erfindung wird an der dem vorbeifahrenden Fahrzeug zugewandten Flanke des ersten Fahrzeugs und an der dem vorbeifahrenden Fahrzeug zugewandten Flanke des zweiten Fahrzeugs jeweils der vordere Eckpunkt oder jeweils der hintere Eckpunkt erfasst und die Orientierung der Verbindungsgeraden der erfassten Eckpunkte wird als die in der Parklücke zu erreichende Orientierung des zu parkenden Fahrzeugs festgelegt. Somit wird die Orientierung der seitlichen Parklückenbegrenzung (und der Parklücke) aus einer gedachten Verbindungslinie der hinteren (oder alternativ der vorderen) Ecken der beiden die Parklücke begrenzenden Fahrzeuge bestimmt. Vorteilhaft wird auf diese Weise bei gleichsinnig schief stehenden Fahrzeugen ein dadurch möglicher Fehler ausgeglichen.

Eine zusätzliche vorteilhafte Weiterbildung der Erfindung sieht vor, dass an der dem vorbeifahrenden Fahrzeug zugewandten Flanke des ersten Fahrzeugs und an der dem vorbeifahrenden Fahrzeug zugewandten Flanke des zweiten Fahrzeugs jeweils zumindest einer der beiden Eckpunkte erfasst wird. Es ist dabei beliebig, ob im Falle des Erfassens nur eines Eckpunktes eines Fahrzeugs der vordere oder der hintere Eckpunkt erkannt wird. Das Verfahren ist dadurch besonders stör-unanfällig.

Dabei bedarf es in der weiteren Auswertung der erfassten Daten einer vergleichsweise nur geringen Rechenleistung zum Beispiel des Steuergerätes, wenn gemäß einer Weiterbildung der Erfindung die Mittelpunkte der Flanken des ersten und des zweiten Fahrzeugs aus den jeweiligen Eckpunkten ermittelt werden oder ausgehend von einem der Eckpunkte extrapoliert werden. Die direkte Berechnung eines jeweiligen Flankenmittelpunktes ist möglich, wenn von der betreffenden Flanke beide Eckpunkte erfasst wurden. Eine Extrapolation bietet sich hingegen an, wenn von der betreffenden Flanke nur einer der Eckpunkte erfasst wurde. In sehr einfacher Weise kann die Extrapolation dadurch vorgenommen werden, dass ausgehend von einer mittleren statistischen Flankenlänge, beispielsweise 4,4 m, ausgegangen wird und dementsprechend ausgehend vom Eckpunkt der Mittelpunkt in einem der halben Flankenlänge entsprechenden Abstand, beispielsweise 2,2 m, festgelegt wird.

Gemäß einer zusätzlichen vorteilhaften Weiterbildung der Erfindung wird die Orientierung der Verbindungsgeraden der beiden Mittelpunkte der Flanken als die in der Parklücke zu erreichende Orientierung des zu parkenden Fahrzeugs festgelegt. Somit wird die Orientierung der seitlichen Parklückenbegrenzung aus der gedachten Verbindungslinie der (exakt berechneten oder abgeschätzten) Mitten der beiden Fahrzeugflanken bestimmt, wodurch vorteilhaft weder gegensinnig noch gleichsinnig schief stehende Fahrzeuge einen nennenswerten Fehler bei der Bestimmung der Orientierung verursachen können.

Gemäß einer anderen vorteilhaften Weiterbildung der Erfindung wird ein die Parklücke an deren vorderen Ende begrenzendes Fahrzeug und/oder ein die Parklücke an deren hinteren Ende begrenzendes Fahrzeug beim Vorbeifahren des zu parkenden Fahrzeugs an der Parklücke erfasst, und ausgehend von dem erfassten Fahrzeug beziehungsweise den erfassten Fahrzeugen wird ein Fangbereich einer zu erwartenden seitlichen Parklückenbegrenzung berechnet. Diese Weiterbildung des erfindungsgemäßen Verfahrens bietet den Vorteil, dass ein Irrtum in der vermeintlichen Erkennung der seitlichen Parklückenbegrenzung weitestgehend ausgeschlossen werden kann; denn es besteht grundsätzlich die Gefahr, dass bestimmte Objekte, wie zum Beispiel ein Bordstein oder eine Hauswand, im Einzelfall nicht als Seitenreferenz zu benutzen ist. Das kann beispielsweise der Fall sein, wenn Fahrzeuge auch den Bordstein übergreifend parken dürfen oder sich ein Gehweg zwischen der Parklücke und der Hauswand befindet. Um zu vermeiden, dass solche Objekte in den genannten Fällen als Seitenreferenz berücksichtigt werden, wird ein Band oder eine Zone als Fangbereich für die potentielle seitliche Parklückenbegrenzung zum Beispiel von dem Steuergerät berechnet.

Vorzugsweise wird dann gemäß einer Weiterbildung der Erfindung bei Erfassung einer möglichen seitlichen Parklückenbegrenzung im Bereich der Parklücke und innerhalb des Fangbereichs die mögliche seitliche Parklückenbegrenzung als tatsächliche seitliche Parklückenbegrenzung festgelegt. Falls eine mögliche Seitenreferenz, beispielsweise Bordstein oder Hauswand, außerhalb des Fangbereichs detektiert wird, wird sie nicht als seitliche Parklückenbegrenzung berücksichtigt.

Die Qualität des erfindungsgemäßen Verfahrens wird weiter erhöht, wenn gemäß einer anderen vorteilhaften Weiterbildung der Erfindung vor dem Erreichen und/oder nach dem Passieren der Parklücke sowohl eine rechte Fahrbahnbegrenzung und/oder an der rechten Fahrbahnbegrenzung parkende Fahrzeuge als auch eine linke Fahrbahnbegrenzung und/oder an der linken Fahrbahnbegrenzung parkende Fahrzeuge erfasst werden. Das kann beispielsweise durch Nutzung von seitlich ausgerichteten Sensoren der Sensoranordnung an beiden Längsseiten des einzuparkenden Fahrzeugs erfolgen. Durch die zusätzlich erfassten Daten kann eine genauere Ausrichtung des Fahrzeugs erreicht werden. Beispielsweise werden bei der Vorbeifahrt zur Bestimmung der Parklückengeometrie beidseitig seitlich gerichtete Sensoren mit vergleichsweise hoher Reichweite eingesetzt. Durch eine kontinuierliche Abtastung können Messdaten für die Berechnung der Orientierung des einzuparkenden Fahrzeugs bezüglich in der Regel parallel zueinander ausgerichteten Bordsteine (oder anderer Fahrbahnbegrenzungen) gewonnen werden. Da der Abstand zwischen gegenüberliegenden Bordsteinen regelmäßig konstant ist, ist es möglich, Messwerte zu unterscheiden, die nicht von den Bordsteinen, sondern von parkenden Fahrzeugen oder anderen Hindernissen herrühren. Zusätzlich können solche abweichenden Messwerte unter Hinzuziehung der Messwerte der anderen Fahrzeugseite herausgefiltert oder korrigiert werden. Insgesamt kann die Datenqualität auf diese Weise erheblich verbessert werden.

Gemäß einer zusätzlichen vorteilhaften Weiterbildung der Erfindung wird ausgehend von den erfassten Fahrbahnbegrenzungen und/oder geparkten Fahrzeugen die in der Parklücke zu erreichende Orientierung des zu parkenden Fahrzeugs festgelegt. Dabei ist es hilfreich, dass Daten einer gegenüberliegenden Fahrbahnbegrenzung vorliegen, die einen deutlichen Hinweis auf die Orientierung der seitlichen Parklückenbegrenzung geben können.

Wird gemäß einer anderen vorteilhaften Weiterbildung der Erfindung der Gierwinkel zwischen der in der Parklücke zu erreichenden Orientierung des Fahrzeugs und einer momentanen Orientierung der Fahrzeuglängsachse des zu parkenden Fahrzeugs ermittelt, so liegt ein besonders aussagekräftiges Maß für die Durchführung der Bahnplanung für den Einparkvorgang vor.

Ein sehr zielgenaues Einparken mit zudem nur wenigen Einparkzügen kann gemäß einer vorteilhaften Weiterbildung der Erfindung erreicht werden, wenn während des Einparkvorgangs der Gierwinkel fortwährend in Abhängigkeit von der tatsächlichen Stellung des zu parkenden Fahrzeugs bezüglich der Parklücke neu ermittelt wird. Damit kann die Bahnkurve ständig den tatsächlichen Gegebenheiten angepasst werden. Zur Ermittlung des Gierwinkels können in diesem Fall vorteilhaft Sensoren der Sensoranordnung verwendet werden, die im Front- und Heckbereich des einzuparkenden Fahrzeugs, bevorzugt in dessen vorderen und hinteren Stoßfänger, angeordnet sind. Aufgrund deren Signale ist eine permanente Korrektur des zuvor errechneten Gierwinkels möglich, so dass Korrekturen am Einparkvorgang vorgenommen werden können. Durch Verlängerung oder Verkürzung der Einparktrajektorie kann der Fahrer durch entsprechende Signale eine bestmögliche Ausrichtung des Fahrzeugs in der Parklücke erreichen.

Grundsätzlich kann die Kenntnis der seitlichen Parklückenbegrenzung beispielsweise schon allein als Information über die Tiefe der Parklücke hilfreich sein. Hingegen wird die Unterstützung des Einparkvorgangs zusätzlich erheblich verbessert, wenn gemäß einer anderen vorteilhaften Weiterbildung der Erfindung auf Grundlage der festgelegten seitlichen Parklückenbegrenzung und/oder der festgelegten, in der Parklücke zu erreichenden Orientierung des zu parkenden Fahrzeugs eine von dem Fahrzeug während des Einparkvorgangs zu verfolgende Bahn berechnet wird.

### Zeichnung

Verschiedene Ausführungsbeispiele der Erfindung sind in der Zeichnung schematisiert dargestellt und werden nachfolgend näher beschrieben. Es zeigen
- Figur 1: eine erste Einparksituation mit zwei die Parklücke begrenzenden Fahrzeugen,
- Figur 2: eine zweite Einparksituation mit zwei die Parklücke begrenzenden Fahrzeugen,
- Figur 3: eine dritte Einparksituation mit zwei die Parklücke begrenzenden Fahrzeugen,
- Figur 4: eine Einparksituation mit Erfassung eines Fangbereichs,
- Figur 5: eine weitere Einparksituation mit Erfassung eines Fangbereichs,
- Figur 6: eine Fahrsituation mit Erfassung beidseitiger Fahrbahnränder,
- Figur 7: eine Darstellung von in der Fahrsituation nach Figur 6 erzeugten Sensorsignalen und
- Figur 8: eine seitliche Einparksituation mit Nutzung zusätzlicher Sensorsignale.

### Beschreibung der Ausführungsbeispiele

In sämtlichen Figuren sind sich entsprechende Elemente mit gleichen Bezugszeichen versehen.

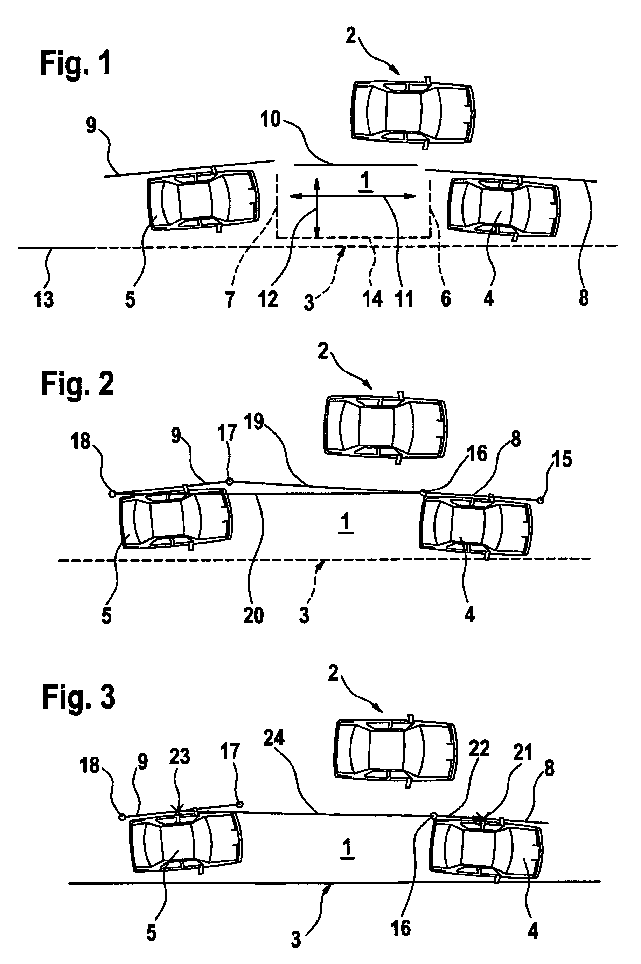

Figur 1 zeigt ein in eine seitliche Parklücke 1 einzuparkendes Fahrzeug 2. Die Parklücke 1 befindet sich an einem Bordstein 3 zwischen zwei bereits geparkten Fahrzeugen 4, 5 und weist eine seitliche Parklückenbegrenzung 14 als Abschnitt des Bordsteins 3 auf. Von den geparkten Fahrzeugen 4, 5 begrenzt ein erstes Fahrzeug 4 die Parklücke 1 an deren vorderen Ende 6, und ein zweites Fahrzeug 5 begrenzt die Parklücke 1 an deren hinteren Ende 7. Es ist zu erkennen, dass sowohl das erste Fahrzeug 4 als auch das zweite Fahrzeug 5 schräg zum Bordstein 3 steht, und zwar in der Weise, dass die beiden Fahrzeuge 4, 5 gegensinnig zueinander angeordnet sind. Zur Verdeutlichung ist sowohl die dem vorbeifahrenden Fahrzeug 2 zugewandte Flanke 8 des ersten Fahrzeugs 4 als auch die dem vorbeifahrenden Fahrzeug 2 zugewandte Flanke 9 des zweiten Fahrzeugs 5 eingezeichnet. Die Flanken 8, 9 geben gleichzeitig die Orientierung der geparkten Fahrzeuge 4, 5 an. Die zu erreichende Orientierung des einzuparkenden Fahrzeugs 2 in der Parklücke 1, das heißt die Zielorientierung des Fahrzeugs 2, ist als Linie 10 angegeben. Sie ergibt sich als Mittelwert der beiden von dem Fahrzeug 2 erfassten Orientierungen der geparkten Fahrzeuge 4, 5.

Ferner ist Figur 1 entnehmbar, dass die Parklücke 1 durch eine Länge 11 und eine Tiefe 12 charakterisierte Abmessungen aufweist, die ein Einparken des Fahrzeugs 2 erlauben. Der Bordstein 3 wird im Bereich der Parklücke 1, beispielsweise aufgrund von Verschmutzungen, von dem Fahrzeug 2 nicht detektiert und ist daher gestrichelt dargestellt. In einem Straßenabschnitt vor dem Erreichen der Parklücke 1 durch das einzuparkende Fahrzeuge 2 fand hingegen eine Erfassung des Bordsteins statt, der Bordstein ist hier als Bordstein 13 mittels einer durchgehenden Linie dargestellt.

Eine in Figur 2 dargestellte Einparksituation ähnelt derjenigen aus Figur 1. Ein Fahrzeug 2 ist in einer seitlichen Parklücke 1 zwischen zwei bereits parkende Fahrzeuge 4, 5 einzuparken. Von den bereits parkenden Fahrzeugen 4, 5 wurden die Eckpunkte 15, 16, 17, 18 ihrer Flanken 8, 9 durch das zu parkende, vorbeifahrende Fahrzeug 2 erfasst. Die in der Parklücke 1 zu erreichende Orientierung des zu parkenden Fahrzeugs 2 ergibt sich aus der Orientierung einer ersten Verbindungsgeraden 19, die die vorderen Eckpunkte 15, 17 der Flanken 8, 9 verbindet, oder aus der Orientierung einer zweiten Verbindungsgeraden, die die hinteren Eckpunkte 16, 18 der Flanken 8, 9 verbindet.

Auch Figur 3 zeigt eine ähnliche Einparksituation, wobei ein Fahrzeug 2 seitlich in eine Parklücke 1 an einem Bordstein 3 zwischen zwei geparkten Fahrzeugen 4, 5 einzuparken ist. In dem hier vorliegenden Fall wurde von dem einzuparkenden Fahrzeug 2 beim Vorbeifahren lediglich ein hinterer Eckpunkt 16 des die Parklücke 1 an deren vorderen Ende begrenzenden Fahrzeugs 4 erfasst. Ausgehend von diesem Eckpunkt 16 wurde der Mittelpunkt der zugehörigen Fahrzeugflanke 8 des Fahrzeugs 4 extrapoliert, wobei beispielhaft als halber Wert für die Länge der Fahrzeugflanke 8 eine durch einen Pfeil 22 symbolisierte Länge von 2,2 m (Abstand der Mitte der Flanke vom Eckpunkt) angenommen wurde. Von dem die Parklücke 1 an deren hinteren Ende begrenzenden Fahrzeug 5 wurden demgegenüber sowohl ein vorderer Eckpunkt 17 als auch ein hinterer Eckpunkt 18 erfasst. Der Mittelpunkt 23 der zugehörigen Flanke 9 wird als Mittelwert aus den Eckpunkten 17, 18 berechnet. Eine Verbindungsgerade 24 zwischen den beiden Mittelpunkten 21, 23 der Flanken 8, 9 ergibt die in der Parklücke 1 zu erreichende Orientierung des zu parkenden Fahrzeugs 2.

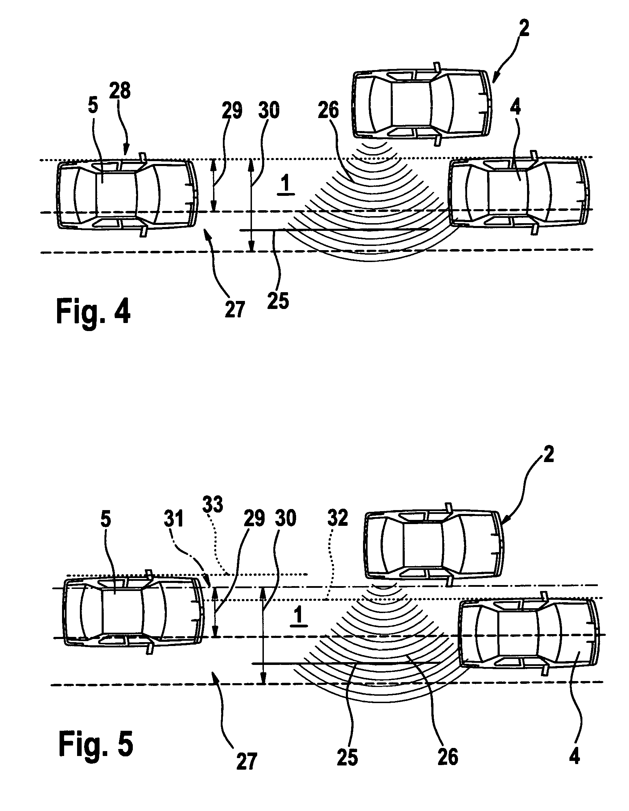

Den Darstellungen nach Figuren 4, 5 liegt ein Verfahren zugrunde, bei dem von einem zu parkenden Fahrzeug 2 beim Vorbeifahren an einer Parklücke 1 mittels einer durch ein Signalfeld 26 symbolisierten, Ultraschallsensoren aufweisenden Sensoranordnung ein die Parklücke 1 an deren vorderen Ende begrenzendes Fahrzeug 4 und ein die Parklücke 1 an deren hinteren Ende begrenzendes Fahrzeug 5 erfasst wird. Außerdem wird jeweils eine mögliche seitliche Parklückenbegrenzung 25 erfasst. Ausgehend von den erfassten Fahrzeugen 4, 5 wird ein Fangbereich 27 berechnet, in welchem die seitliche Parklückenbegrenzung zu erwarten ist.

Bei dem Ausführungsbeispiel nach Figur 4 wird jeweils die dem vorbeifahrenden Fahrzeug 2 zugewandte äußere Flanke, hier dargestellt von einer punktierten Linie 28, der geparkten Fahrzeuge 4, 5 zur Bestimmung des Fangbereichs 27, das heißt einer Gültigkeitszone für eine Seitenreferenz, genutzt. Der Fangbereich 27 wird von einem Band gebildet, dessen Außenseiten durch einen minimalen Abstand 29 und einen maximalen Abstand 30 von den äußeren Flanken bestimmt werden. Dieses Verfahren bietet sich bei in einer Linie parkenden Fahrzeugen 4, 5 an.

Bei versetzt parkenden Fahrzeugen 4, 5 kann dagegen - wie in Figur 5 dargestellt - eine Referenzmittellinie 31, die sich als Mittelwert aus Verlängerungen 32, 33 der Fahrzeugflanken der parkenden Fahrzeuge 4, 5 ergibt, genutzt werden. Ausgehend von der Referenzmittellinie 31 wird der Fangbereich 27 durch einen minimalen Abstand 29 und einen maximalen Abstand 30 gebildet.

Sowohl in dem Ausführungsbeispiel nach Figur 4 als auch in dem Ausführungsbeispiel nach Figur 5 liegt die erfasste mögliche seitliche Parklückenbegrenzung 25 innerhalb des Fangbereichs 27; sie wird daher als tatsächliche seitliche Parklückenbegrenzung festgelegt.

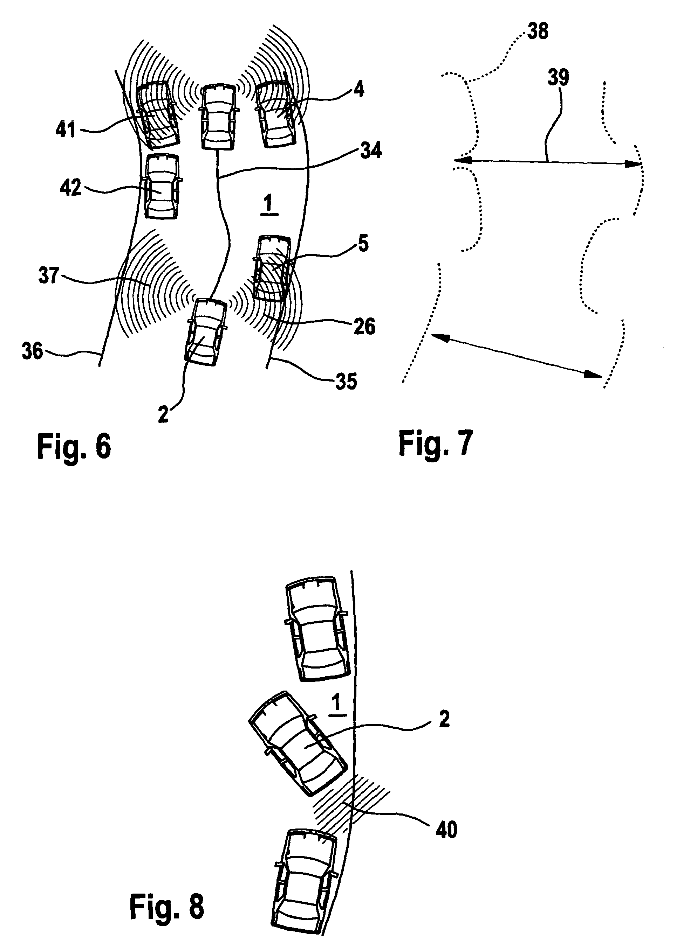

Figur 6 zeigt ein Fahrzeug 2, das eine Parklücke 1 sucht und dabei eine Bahn 34 zurücklegt. Während der Fahrt werden von einer Sensoranordnung mit durch Signalfelder 26, 37 symbolisierte Ultraschallsensoren des Fahrzeugs 2 sowohl an einer rechten Fahrbahnbegrenzung 35 als auch an einer linken Fahrbahnbegrenzung 36 parkende Fahrzeuge 4, 5, 41, 42 erfasst. Ebenso erfolgt eine Erfassung der Fahrbahnbegrenzungen 35, 36. Die erfassten Daten sind in Figur 7 in Form von Abstandspunkten 38 dargestellt.

Außerdem ist hier die durch die Fahrbahnbegrenzungen 35, 36 (Figur 6) festgelegte Straßenbreite 39 zu entnehmen.

In Figur 8 ist das Fahrzeug 2 nach Figur 6 bei einem Einparkvorgang (Rückwärtseinparken) in die Parklücke 1 gezeigt. Dabei kommen zusätzliche Sensoren, symbolisiert durch ein Signalfeld 40, zum Einsatz, die im Heckbereich des Fahrzeugs 2 angeordnet sind. Mit Hilfe dieser Sensoren erfolgt eine fortwährende Korrektur des Gierwinkels des Fahrzeugs 2 durch Verlängerung oder Kürzung der Einparktrajektorie. Dabei werden die bereits während der Vorbeifahrt des Fahrzeugs 2 erfassten Daten bezüglich der Parklücke 1 mit den momentanen tatsächlichen Gegebenheiten abgeglichen.

## Patentansprüche

1. Verfahren zur Unterstützung eines Einparkvorgangs eines Fahrzeugs in eine seitlich zum zu parkenden Fahrzeug angeordnete Parklücke, wobei mittels einer Sensoranordnung des Fahrzeugs die Parklücke während eines Vorbeifahrens des Fahrzeugs an der Parklücke erfasst wird, **dadurch gekennzeichnet, dass** die Position der dem zu parkenden Fahrzeug (2) abgewandten seitlichen Parklückenbegrenzung (14) und/oder die Orientierung der seitlichen Parklückenbegrenzung (14) bezüglich des zu parkenden Fahrzeugs (2) aus vor dem Erreichen und/oder nach dem Passieren der Parklücke (1) durch das Fahrzeug (2) von der Sensoranordnung erfassten Daten berechnet wird.

2. Verfahren nach Anspruch 1, **dadurch gekennzeichnet, dass** die Länge (11) der Parklücke (1) während des Vorbeifahrens des zu parkenden Fahrzeugs (2) erfasst wird.

3. Verfahren nach Anspruch 1 oder 2, **dadurch gekennzeichnet, dass** die Tiefe (12) der Parklücke (1) während des Vorbeifahrens des zu parkenden Fahrzeugs (2) erfasst wird.

4. Verfahren nach einem der vorhergehenden Ansprüche, **dadurch gekennzeichnet, dass** die Daten mittels eines Puls-Echo-Verfahrens erfasst werden.

5. Verfahren nach einem der vorhergehenden Ansprüche, **dadurch gekennzeichnet, dass** vor dem Erreichen der Parklücke (1) eine eine potentielle seitliche Parklückenbegrenzung bildende Fahrbahnbegrenzung und/oder eine Reihe bereits parkender Fahrzeuge erfasst wird.

6. Verfahren nach einem der vorhergehenden Ansprüche, **dadurch gekennzeichnet, dass** sowohl ein die Parklücke (1) an deren vorderen Ende (6) begrenzendes erstes Fahrzeug (4) als auch ein die Parklücke (1) an deren hinteren Ende (7) begrenzendes zweites Fahrzeug (5) beim Vorbeifahren des zu parkenden Fahrzeugs (2) an der Parklücke (1) erfasst wird.

7. Verfahren nach Anspruch 6, **dadurch gekennzeichnet, dass** sowohl die Orientierung des ersten Fahrzeugs (4) als auch die Orientierung des zweiten Fahrzeugs (5) erfasst wird und dass der Mittelwert der beiden erfassten Orientierungen als die in der Parklücke (1) zu erreichende Orientierung des zu parkenden Fahrzeugs (2) festgelegt wird.

8. Verfahren nach Anspruch 6, **dadurch gekennzeichnet, dass** an der dem vorbeifahrenden Fahrzeug (2) zugewandten Flanke (8) des ersten Fahrzeugs (4) und an der dem vorbeifahrenden Fahrzeug (2) zugewandten Flanke (9) des zweiten Fahrzeugs (5) jeweils der vordere Eckpunkt (15, 17) oder jeweils der hintere Eckpunkt (16, 18) erfasst wird und dass die Orientierung der Verbindungsgeraden (19, 20) der erfassten Eckpunkte als die in der Parklücke (1) zu erreichende Orientierung des zu parkenden Fahrzeugs (2) festgelegt wird.

9. Verfahren nach Anspruch 6, **dadurch gekennzeichnet, dass** an der dem vorbeifahrenden Fahrzeug (2) zugewandten Flanke (8) des ersten Fahrzeugs (4) und an der dem vorbeifahrenden Fahrzeug (2) zugewandten Flanke (9) des zweiten Fahrzeugs (5) jeweils zumindest einer der beiden Eckpunkte (16, 17, 18) erfasst wird.

10. Verfahren nach Anspruch 9, **dadurch gekennzeichnet, dass** die Mittelpunkte (21, 23) der Flanken (8, 9) des ersten und des zweiten Fahrzeugs (4, 5) aus den jeweiligen Eckpunkten (17, 18) ermittelt werden oder ausgehend von einem der Eckpunkte (16) extrapoliert werden.

11. Verfahren nach Anspruch 10, **dadurch gekennzeichnet, dass** die Orientierung der Verbindungsgeraden (24) der beiden Mittelpunkte (21, 23) der Flanken (8, 9) als die in der Parklücke (1) zu erreichende Orientierung des zu parkenden Fahrzeugs (2) festgelegt wird.

12. Verfahren nach einem der vorhergehenden Ansprüche, **dadurch gekennzeichnet, dass** ein die Parklücke (1) an deren vorderen Ende begrenzendes Fahrzeug (4) und/oder ein die Parklücke (1) an deren hinteren Ende begrenzendes Fahrzeug (5) beim Vorbeifahren des zu parkenden Fahrzeugs (2) an der Parklücke (1) erfasst wird und dass ausgehend von dem erfassten Fahrzeug beziehungsweise den erfassten Fahrzeugen (4, 5) ein Fangbereich (27) einer zu erwartenden seitlichen Parklückenbegrenzung berechnet wird.

13. Verfahren nach Anspruch 12, **dadurch gekennzeichnet, dass** bei Erfassung einer möglichen seitlichen Parklückenbegrenzung (25) im Bereich der Parklücke (1) und innerhalb des Fangbereichs (27) die mögliche seitliche Parklückenbegrenzung (25) als tatsächliche seitliche Parklückenbegrenzung festgelegt wird.

14. Verfahren nach einem der vorhergehenden Ansprüche, **dadurch gekennzeichnet, dass** vor dem Erreichen und/oder nach dem Passieren der Parklücke (1) sowohl eine rechte Fahrbahnbegrenzung (35) und/oder an der rechten Fahrbahnbegrenzung (35) parkende Fahrzeuge (4, 5) als auch eine linke Fahrbahnbegrenzung (36) und/oder an der linken Fahrbahnbegrenzung (36) parkende Fahrzeuge (41, 42) erfasst werden.

15. Verfahren nach Anspruch 14, **dadurch gekennzeichnet, dass** ausgehend von den erfassten Fahrbahnbegrenzungen (35, 36) und/oder geparkten Fahrzeugen (4, 5, 41, 42) die in der Parklücke (1) zu erreichende Orientierung des zu parkenden Fahrzeugs (2) festgelegt wird.

16. Verfahren nach einem der vorhergehenden Ansprüche, dass der Gierwinkel zwischen der in der Parklücke (1) zu erreichenden Orientierung des Fahrzeugs (2) und einer momentanen Orientierung der Fahrzeuglängsachse des zu parkenden Fahrzeugs (2) ermittelt wird.

17. Verfahren nach einem der vorhergehenden Ansprüche, **dadurch gekennzeichnet, dass** während des Einparkvorgangs der Gierwinkel fortwährend in Abhängigkeit von der tatsächlichen Stellung des zu parkenden Fahrzeugs (2) bezüglich der Parklücke (1) neu ermittelt wird.

18. Verfahren nach einem der vorhergehenden Ansprüche, **dadurch gekennzeichnet, dass** auf Grundlage der festgelegten seitlichen Parklückenbegrenzung und/oder der festgelegten, in der Parklücke (1) zu erreichenden Orientierung des zu parkenden Fahrzeugs (2) eine von dem Fahrzeug (2) während des Einparkvorgangs zu verfolgende Bahn berechnet wird.

## Claims

1. Method for assisting a parking procedure of a vehicle into a parking space arranged to the side of the vehicle to be parked, wherein by means of the sensor arrangement of the vehicle the parking space is sensed while the vehicle is travelling past the parking space, **characterized in that** the position of the lateral parking space boundary (14) facing away from the vehicle (2) to be parked and/or the orientation of the lateral parking space boundary (14) with respect to the vehicle (2) to be parked is calculated from data which is acquired by the sensor arrangement before the vehicle (2) reaches the parking space (1) and/or after the vehicle (2) passes the parking space (1).

2. Method according to Claim 1, **characterized in that** the length (11) of the parking space (1) is sensed while the vehicle (2) to be parked travels past.

3. Method according to Claim 1 or 2, **characterized in that** the depth (12) of the parking space (1) is sensed while the vehicle (2) to be parked travels past.

4. Method according to one of the preceding claims, **characterized in that** the data is acquired by means of a pulse-echo method.

5. Method according to one of the preceding claims, **characterized in that** a carriageway boundary which forms a potential lateral parking space boundary and/or a series of vehicles which are already parked is sensed before the parking space (1) is reached.

6. Method according to one of the preceding claims, **characterized in that** a first vehicle (4) which bounds the parking space (1) at the front end (6) of said parking space (1) and a second vehicle (5) which bounds the parking space (1) at the rear end (7) of said parking space (1) is sensed as the vehicle (2) to be parked travels past the parking space (1).

7. Method according to Claim 6, **characterized in that** both the orientation of the first vehicle (4) and the orientation of the second vehicle (5) are sensed, and **in that** the mean value of the two sensed orientations is defined as the orientation of the vehicle (2) to be parked which is to be brought about in the parking space (1).

8. Method according to Claim 6, **characterized in that** in each case the front corner point (15, 17) or in each case the rear corner point (16, 18) is sensed at that edge (8) of the first vehicle (4) which faces the vehicle (2) which is travelling past and at that edge (9) of the second vehicle (5) which faces the vehicle (2) which is travelling past and **in that** the orientation of the connection straight lines (19, 20) of the acquired corner points is defined as the orientation of the vehicle (2) to be parked which is to be brought about in the parking space (1).

9. Method according to Claim 6, **characterized in that** in each case at least one of the two corner points (16, 17, 18) is sensed at that edge (8) of the first vehicle (4) which faces the vehicle (2) which is travelling past and at that edge (9) of the second vehicle (5) which faces the vehicle (2) which is travelling past.

10. Method according to Claim 9, **characterized in that** the central points (21, 23) of the edges (8, 9) of the first and second vehicles (4, 5) are determined from the respective corner points (17, 18) or extrapolated on the basis of one of the corner points (16).

11. Method according to Claim 10, **characterized in that** the orientation of the connection straight lines (24) of the two central points (21, 23) of the edges (8, 9) is defined as the orientation of the vehicle (2) to be parked which is to be brought about in the parking space (1).

12. Method according to one of the preceding claims, **characterized in that** a vehicle (4) which bounds the parking space (1) at its front end and/or a vehicle (5) which bounds the parking space (1) at its rear end is sensed as the vehicle (2) to be parked travels past the parking space (1), and **in that** a capture range (27) of an anticipated lateral parking space boundary is calculated on the basis of the sensed vehicle or sensed vehicles (4, 5).

13. Method according to Claim 12, **characterized in that** when a possible lateral parking space boundary (25) is sensed in the region of the parking space (1) and within the capture range (27) the possible lateral parking space boundary (25) is defined as an actual lateral parking space boundary.

14. Method according to one of the preceding claims, **characterized in that**, before the parking space (1) is reached and/or after the parking space (1) has been passed, both a right-hand carriageway boundary (35) and/or vehicles (4, 5) which are parked on the right-hand carriageway boundary (35) and a left-hand carriageway boundary (36) and/or vehicles (41, 42) which are parked on the left-hand carriageway boundary (36) are sensed.

15. Method according to Claim 14, **characterized in that** the orientation of the vehicle (2) to be parked which is to be brought about in the parking space (1) is defined on the basis of the sensed carriageway boundaries (35, 36) and/or parked vehicles (4, 5, 41, 42).

16. Method according to one of the preceding claims, **characterized in that** the yaw angle between the orientation of the vehicle (2) which is to be brought about in the parking space (1) and an instantaneous orientation of the longitudinal axis of the vehicle (2) to be parked are determined.

17. Method according to one of the preceding claims, **characterized in that**, during the parking procedure, the yaw angle is continuously newly determined as a function of the actual position of the vehicle (2) to be parked with respect to the parking space (1).

18. Method according to one of the preceding claims, **characterized in that** a path which is to be followed by the vehicle (2) during the parking procedure is calculated on the basis of the defined, lateral parking space boundary and/or the defined orientation of the vehicle (2) to be parked which is to be brought about in the parking space (1).

## Revendications

1. Procédé pour assister une manoeuvre de rangement d'un véhicule dans un emplacement de stationnement situé à côté du véhicule à ranger, selon lequel, à l'aide d'un dispositif de capteur du véhicule on saisit l'emplacement de stationnement lorsque le véhicule passe devant l'emplacement,
**caractérisé en ce qu'**
avec les données saisies par le dispositif de capteur on calcule la position de la limitation latérale (14) de l'emplacement de stationnement, sur le côté opposé à celui du véhicule (2) à ranger et/ ou l'orientation de la limitation latérale de stationnement (14) par rapport au véhicule (2) à ranger avant que le véhicule (2) n'atteigne l'emplacement et/ou après le passage devant l'emplacement de stationnement (1),

2. Procédé selon la revendication 1,
**caractérisé en ce qu'**
on saisit la longueur (11) de l'emplacement de stationnement (1) pendant que le véhicule (2) à ranger passe devant l'emplacement.

3. Procédé selon la revendication 1 ou 2,
**caractérisé en ce qu'**
on saisit la profondeur (12) de l'emplacement de stationnement (1) pendant que le véhicule à ranger (2) passe devant l'emplacement.

4. Procédé selon l'une des revendications précédentes,
**caractérisé en ce qu'**
on saisit les données à l'aide d'un procédé par échos d'impulsions.

5. Procédé selon l'une des revendications précédentes,
**caractérisé en ce qu'**
avant d'atteindre l'emplacement de stationnement (1) on saisit une limite potentielle latérale d'emplacement de stationnement formant une limitation de la chaussée et/ou une série de véhicules déjà rangés.

6. Procédé selon l'une des revendications précédentes,
**caractérisé en ce qu'**
on saisit à la fois un premier véhicule (4) délimitant l'emplacement de stationnement (1) par son côté avant (6) et aussi un second véhicule (5) délimitant, l'emplacement de stationnement (1), par son côté arrière (7) lorsque le véhicule (2) à ranger passe devant l'emplacement de stationnement (1).

7. Procédé selon la revendication 6,
**caractérisé en ce qu'**
on saisit à la fois l'orientation du premier véhicule (4) et celle du second véhicule (6) et on fixe la valeur moyenne des deux orientations saisies comme étant l'orientation du véhicule (2) à ranger dans l'emplacement de stationnement (1).

8. Procédé selon la revendication 6,
**caractérisé en ce qu'**
on saisit chaque fois pour le coin avant (15, 17) ou chaque fois le coin arrière (16, 18) du flanc (8) du premier véhicule (4) tourné vers le véhicule (2) qui passe et du flanc (9) du second véhicule (5) devant lequel passe le véhicule (2), et
on fixe l'orientation des droites (19, 20) passant par les coins saisis comme orientation que le véhicule (2) à ranger doit prendre dans l'emplacement de stationnement (1).

9. Procédé selon la revendication 6,
**caractérisé en ce qu'**
on saisit chaque fois au moins l'un des deux coins (16, 17, 18) du flanc (8) du premier véhicule (4) tourné vers le véhicule (2) qui passe ou du flanc (9) du second véhicule (5) tourné vers le véhicule (2) qui passe.

10. Procédé selon la revendication 9,
**caractérisé en ce qu'**
on détermine le point milieu (21, 23) des flancs (8, 9) du premier et du second véhicule (4, 5) à partir des coins (17, 18) respectifs ou on extrapole à partir de l'un des coins (16).

11. Procédé selon la revendication 10,
**caractérisé en ce qu'**
on fixe l'orientation de la droite (24) passant par les points milieux (21, 23) des flancs (8, 9) comme orientation que le véhicule (2) à ranger doit prendre dans l'emplacement de stationnement (1).

12. Procédé selon l'une des revendications précédentes,
**caractérisé en ce qu'**
on saisit un véhicule (4) qui délimite l'emplacement de stationnement (1) par son extrémité avant et/ou un véhicule (5) qui délimite l'emplacement de stationnement (1) par son extrémité arrière, lorsque le véhicule (2) à ranger passe devant l'emplacement de stationnement (1) et
partant du ou des véhicules saisis (4, 5) on calcule une plage de prise (27) pour une limitation latérale prévisible de l'emplacement de stationnement.

13. Procédé selon la revendication 12,
**caractérisé en ce qu'**
à la saisie d'une limitation latérale possible (25) de l'emplacement de stationnement dans la région de l'emplacement de stationnement (1) et dans la plage de prise (27) on fixe la limitation latérale possible (25) de l'emplacement de stationnement comme limitation latérale effective de l'emplacement de stationnement.

14. Procédé selon l'une des revendications précédentes,
**caractérisé en ce qu'**
avant d'atteindre et/ou après passage de l'emplacement de stationnement (1) on saisit à la fois la limitation à droite (35) de la chaussée et/ou des véhicules (4, 5) rangés le long de la limitation à droite (35) de la chaussée et aussi la limitation à gauche (36) de la chaussée et/ou des véhicules (41, 42) rangés le long de la limitation à gauche (36) de la chaussée.

15. Procédé selon la revendication 14,
**caractérisé en ce que**
partant de la première limitation de chaussée (35, 36) saisie et/ou des véhicules rangés (4, 5, 41, 42), on fixe l'orientation du véhicule (2) à ranger dans l'emplacement de stationnement (1).

16. Procédé selon l'une des revendications précédentes,
**caractérisé en ce qu'**
on détermine l'angle de lacet entre l'orientation que le véhicule à ranger (2) doit atteindre dans l'emplacement de stationnement (1) et l'orientation instantanée de l'axe longitudinal du véhicule (2) à ranger.

17. Procédé selon l'une des revendications précédentes,
**caractérisé en ce qu'**
au cours de la manoeuvre de rangement, on redétermine en permanence l'angle de lacet en fonction de la position effective du véhicule (2) à ranger par rapport à l'emplacement de stationnement (1).

18. Procédé selon l'une des revendications précédentes,
**caractérisé en ce que**
sur le fondement de la limitation latérale fixée de l'emplacement de stationnement et/ou de l'orientation fixée que le véhicule à ranger (2) doit atteindre dans l'emplacement de stationnement (1), on calcule une trajectoire que le véhicule (2) doit suivre au cours de la manoeuvre de rangement.
